Europäisches Patentamt

European Patent Office

Office européen des brevets

(11) Veröffentlichungsnummer: **0 088 229**
**A2**

## (12) EUROPÄISCHE PATENTANMELDUNG

(21) Anmeldenummer: 83100964.2

(22) Anmeldetag: 02.02.83

(51) Int. Cl.³: **G 01 N 21/89**

(30) Priorität: 05.03.82 DE 3208040

(43) Veröffentlichungstag der Anmeldung: **14.09.83**
**Patentblatt 83/37**

(84) Benannte Vertragsstaaten: **AT BE CH DE FR GB IT LI LU NL SE**

(71) Anmelder: **Feldmühle Aktiengesellschaft,**
**Fritz-Vomfelde-Platz 4, D-4000 Düsseldorf 11 (DE)**

(72) Erfinder: **Haubold, Wolfgang, Kollwitzstrasse 73,**
**D-4800 Bielefeld 1 (DE)**
Erfinder: **Farwick, Gerhard, Marderweg 3,**
**D-4811 Leopoldshöhe 1 (DE)**

(74) Vertreter: **Uhlmann, Hans, Dr. rer.nat., Dipl.-Chem.,**
**Gladbacher Strasse 189, D-4060 Viersen 1 (DE)**

(54) **Vorrichtung zum Prüfen von Flachglasbahnen.**

㊸ Beim Prüfen von Flachglasbahnen im Durchlichtverfahren wird die Flachglasbahn mit einem fliegenden Lichtpunkt abgetastet. Der Strahl trifft unter einem spitzen Winkel entgegen der Laufrichtung der Materialbahn auf die Flachglasbahn auf, unter der der Empfänger angeordnet ist. Der Empfänger ist durch eine Schutzplatte abgedeckt, die sich im wesentlichen unter dem gleichen Winkel wie der Lichtstrahl erstreckt, wobei die Schutzplatte den Empfänger komplett abdeckt und nur in der der Zulaufrichtung der Flachglasbahn abgewandten Seite ein Schlitz zum Eintreten des Lichtstrahles freibleibt.

Der Empfänger selbst ist mit einer transparenten Scheibe abgedeckt, die schräg angeordnet ist und in einen Schacht mündet, der evtl. auf die transparente Scheibe fallende Glassplitter aufnimmt, die von einem Blasrohr abgeblasen werden.

Vorrichtung zum Prüfen von Flachglasbahnen.

Die Erfindung betrifft eine Vorrichtung zum Prüfen von Flachglasbahnen im Durchlichtverfahren mittels eines fliegenden Lichtpunktes, bestehend aus einer Lichtquelle, insbesondere einem Laserstrahler, einem diesem zugeordneten, umlaufenden Spiegelrad zur Erzeugung eines fliegenden, die Flachglasbahn abtastenden Lichtpunktes, einem unterhalb der Flachglasbahn angeordneten Empfänger.

Das Prüfen von transparenten Glasbahnen im Durchlicht ist als solches zwar grundsätzlich bekannt, traf jedoch beim Prüfen von Glasbahnen bisher auf erhebliche Schwierigkeiten, da sich Brüche des Glases nie ganz vermeiden lassen. Die herunterfallenden Glasscherben weisen zum Teil recht erhebliche Dimensionen auf und zerstören die darunter angeordneten Prüfaggregate oder beschädigen sie zumindest. Die Glasprüfung wurde deshalb im wesentlichen als Reflektionsprüfung durchgeführt, d.h., daß oberhalb der Glasbahn die Prüfaggregate angeordnet waren, was jedoch wiederum das Auffinden verschiedener Fehler, beispielsweise Kernblasen, erheblich erschwert. Außerdem liefert die Glasprüfung im Durchlicht wesentlich bessere Ergebnisse.

0088229

Der vorliegenden Erfindung liegt damit die Aufgabe zu Grunde, eine Prüfvorrichtung für Glasbahnen zu schaffen, bei der im Durchlicht geprüft werden kann, ohne daß die unter der Glasbahn angeordneten Prüfaggregate beschädigt oder zerstört werden.

Erfindungsgemäß wird das bei einer im Durchlicht prüfenden Anlage dadurch gelöst, daß das Spiegelrad so angeordnet ist, daß der die Flachglasbahn abtastende Lichtstrahl mit dieser entgegen ihrer Laufrichtung einen Winkel $\alpha$ von 35 bis 8o Grad bildet und der unterhalb der Flachglasbahn angeordnete Empfänger durch eine im wesentlichen unter diesem Winkel $\alpha$ sich erstreckende Schutzplatte abgedeckt ist, die an der der Zulaufrichtung der Flachglasbahn abgewandten Seite des Emfpängers einen Schlitz zum Eintreten des durch die Flachglasbahn durchgelassenen Strahles aufweist.

Der abtastende Strahl ist also gegenüber bekannten Aggregaten wesentlich stärker geneigt, d.h., bildet mit der zu prüfenden Bahn einen spitzen Winkel, der bevorzugt zwischen 55 und 65 Grad liegt. Analog bildet auch die Abdeckplatte des Gehäuses, die zweckmäßig gleichzeitig eine Wandseite des Emfpängergehäuses ist, mit dem Erdboden einen Winkel von 35 bis 8o, bzw. 55 bis 65 Grad und deckt damit die empfindlichen Teile des Empfängers ab. Erfolgt nun ein Bruch der Flachglasbahn, so fallen die groben Bruchstücke auf die Schutzplatte und rutschen auf ihr entgegen der Laufrichtung der Flachglasbahn nach unten. Die Glasbruchstücke, die noch eine höhere Energie aufweisen, werden über die Außenkante der Schutzplatte hinweggeschleudert und fallen auf der der Anlaufseite abgewandten

- 3 -

0088229

Seite des Empfängers zu Boden. Damit können nur feine Glassplitter auf Grund der Luftwirbelung noch auf die den Empfänger abdeckende transparente Scheibe gelangen.

Die transparente Scheibe erstreckt sich gemäß einer bevorzugten Ausgestaltung der Erfindung unter einem Winkel von 9o Grad zum durchgelassenen Lichtstrahl, d.h., daß die transparente Scheibe ebenfalls unter einem Winkel, zwischen 55 und 1o Grad, bezogen auf die Horizontale angeordnet ist, also schräg steht. Damit rutscht alles, was auf die transparente Scheibe fällt, also feine Glassplitter und auch Glasstaub über sie hinweg, wodurch sie weder beschädigt werden kann, noch wird dadurch das Meßergebnis verfälscht, da sich keine Ablagerungen auf der transparenten Scheibe bilden können.

Gemäß einer zweckmäßigen Ausgestaltung ist im Anschluß an den Empfänger ein Scherbenschacht zur Aufnahme der Glassplitter angeordnet, der mit seiner äußeren Begrenzung den Schlitz zwischen der Schutzplatte und dem Gehäuse des Empfängers bildet.

Eine bevorzugte Ausgestaltung der Erfindung sieht vor, daß unterhalb der Schutzplatte, im Bereich der transparenten Scheibe ein Blasrohr angeordnet ist. Dieses Blasrohr ist mit Druckluft beaufschlagt und bläst über die transparente Scheibe hinweg, so daß auf die Scheibe fallende Staubpartikel und auch feine Glassplitter in den Scherbenschacht transportiert werden und dadurch die transparente Scheibe stets frei von Staub gehalten wird.

Zweckmäßig ist dabei der Stopper, der den direkten

0088229

Lichteinfall in den Empfänger verhindert, wenn kein Fehler in der zu prüfenden Flachglasbahn vorhanden ist, unterhalb der transparenten Scheibe angeordnet, damit sich an dem durch die Dicke des Stoppers entstehenden Absatz kein Schmutz anlagern kann.

Die Erfindung wird nachstehend an Hand der Zeichnungen beschrieben.

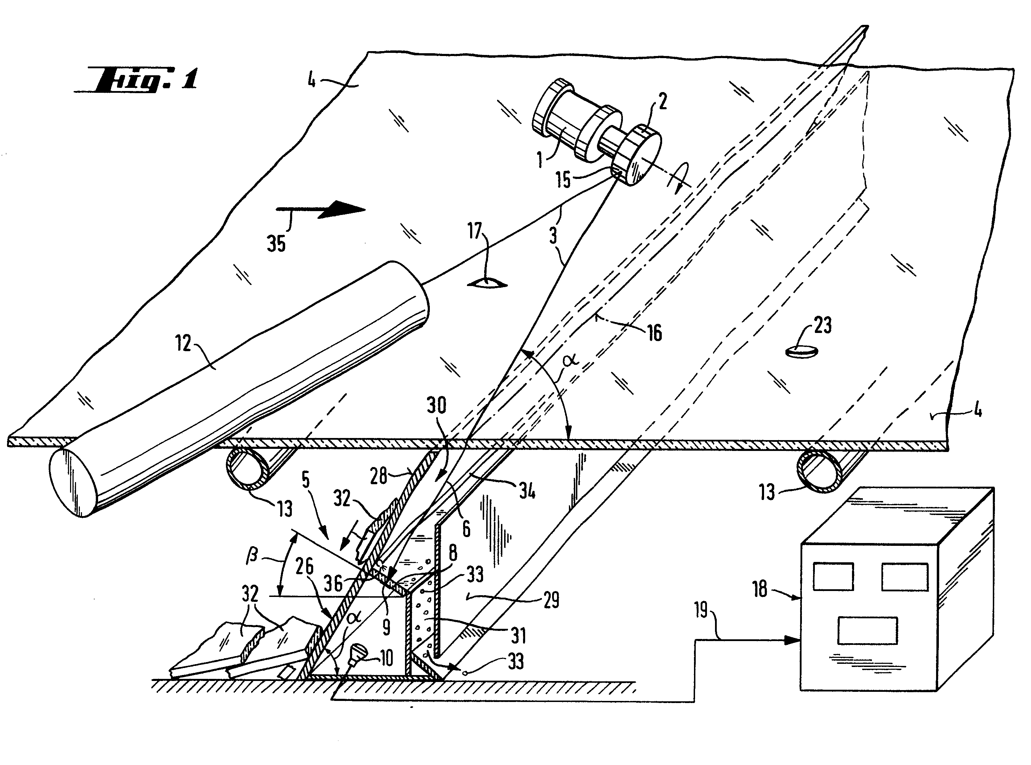

Fig. 1 zeigt in perspektivischer Darstellung als Prinzipskizze eine Vorrichtung zur Transparenzprüfung von Flachglasbahnen,

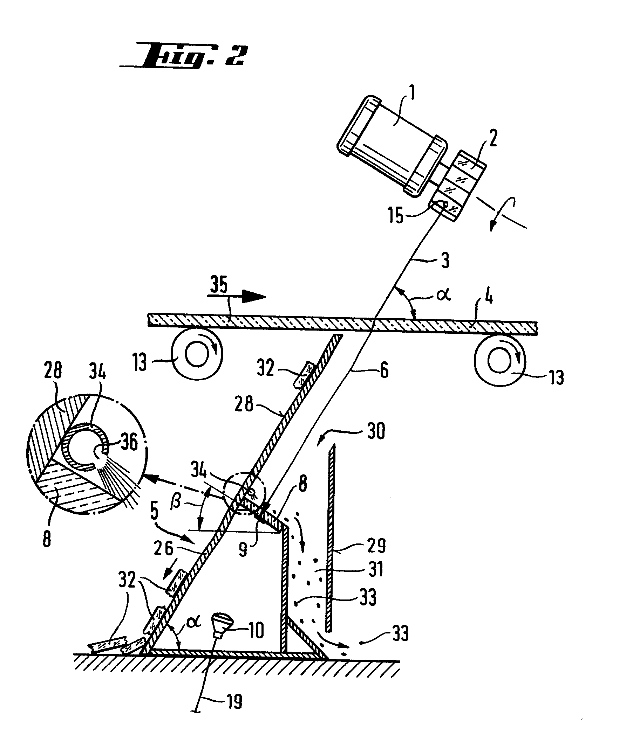

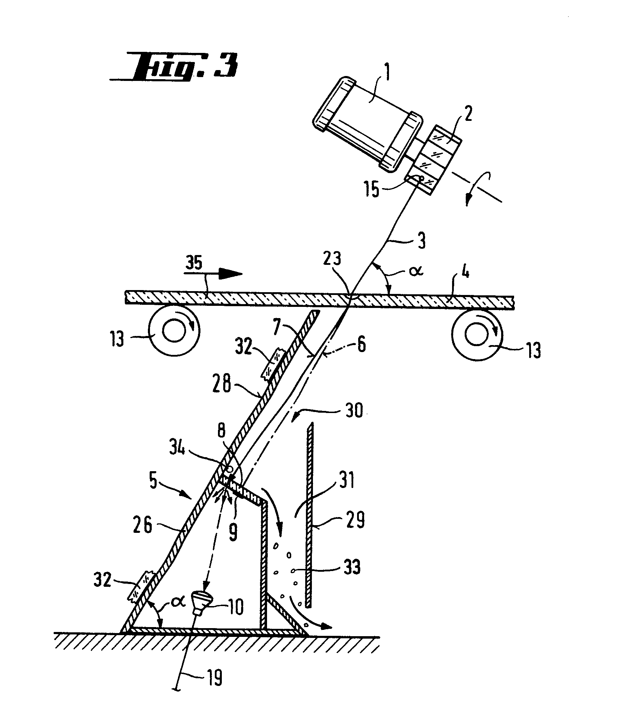

Fig. 2, 3 u. 4 zeigen die gleiche Vorrichtung in der Vorderansicht im Schnitt, wobei in Fig. 2 eine fehlerfreie Flachglasbahn dargestellt ist.

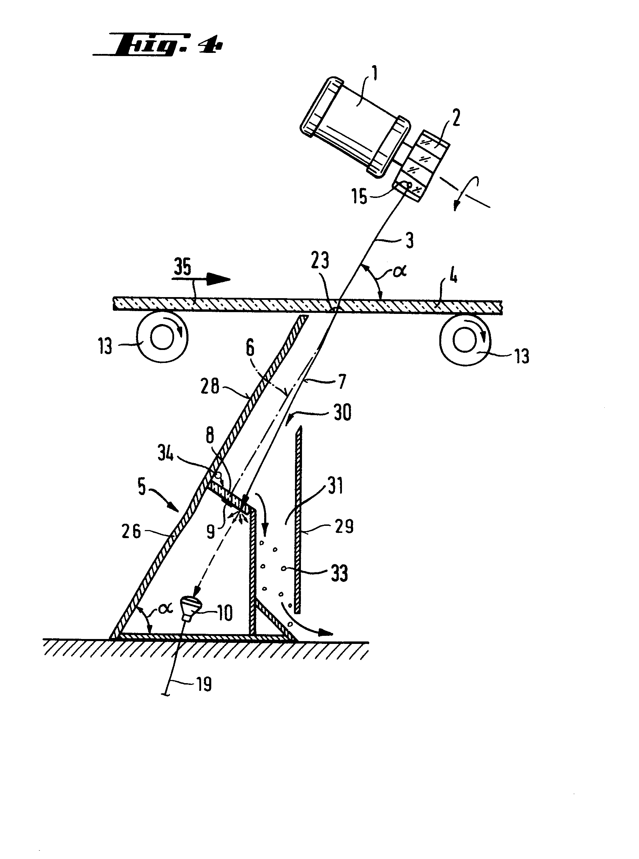

In Fig. 3 eine Bahn mit einem Oberflächen- und in Fig. 4 eine Bahn mit einem Unterflächenfehler.

Der Laserstrahler 12 wirft einen Lichtstrahl 3 auf das durch den Motor 1 angetriebene Spiegelrad 2. Der Lichtstrahl 3 wandert über die sich in Richtung des Pfeiles 35 bewegende Flachglasbahn 4, durchdringt sie und tritt als durchgelassener Lichtstrahl 6 auf der Unterseite der Flachglasbahn 4 aus. Der durchgelassene Lichtstrahl 6 passiert den Schlitz 3o und trifft auf die transparente Scheibe 8, die den Empfänger 5 nach oben hin abdeckt. Der Lichtstrahl 3 und damit auch der durchgelassene Lichtstrahl 6 ist unter einem Winkel $\alpha$ von 6o Grad gegenüber der Flachglasbahn 4 geneigt. Die transparente Scheibe 8 ist im rechten Winkel dazu angeordnet. Sie bildet damit gegenüber der Horizontalen einen Winkel $\beta$ von 3o Grad.

0088229

Unterhalb der transparenten Scheibe 8, jedoch mit ihr in fester Verbindung, befindet sich der Stopper 9, der als dünne Stahllamelle ausgebildet ist und mit der transparenten Scheibe 8 durch Kleben starr verbunden. Dieser Stopper 9 deckt den Bereich der transparenten Scheibe 8 ab, auf den der durchgelassene Lichtstrahl 6 bei fehlerfreier Flachglasbahn 4 auftrifft, so daß kein direkt durchgelassenes Licht auf den fotoelektrischen Wandler lo, der im Empfänger 5 angeordnet ist, fallen kann.

Die Schutzplatte 28 ist unter dem gleichen Winkel $\alpha$ angeordnet, unter dem der Lichtstrahl 3 einfällt, also unter einem Winkel von 6o Grad. Bricht die Flachglasbahn 4, so fallen die groben Glasbruchstücke 32 auf die Schutzplatte 28 und rutschen auf ihr entlang, bis sie den Boden erreichen. Die Schutzplatte 28 ist als Teil des Gehäuses 26 des Empfängers 5 ausgeführt, weist jedoch gegenüber den anderen Empfängerwandungen eine größere Stärke auf. Die gegenüberliegende Seite des Empfängers 5, also die der Bewegungsrichtung der Flachglasbahn 4 abgewandte Seite 29 ist mit einem Scherbenschacht 31 versehen, der in seinem oberen Bereich zwischen der Schutzplatte 28 und seiner Begrenzung den Schlitz 3o bildet. Durch diesen Schlitz 3o eintretende Glassplitter 33 werden von der transparenten Scheibe 8 durch Abblasen entfernt. Die dazu erforderliche Blasluft wird in dem Blasrohr 34 geführt und tritt durch Düsen 36 aus, die in Richtung des Scherbenschachtes 31 angeordnet sind und die transparente Scheibe 8 von Staub und Glassplittern 33 freiblasen.

Tritt ein Fehler in der Flachglasbahn 4, also eine Vertiefung 23 oder eine Erhebung 17 auf, so wird der Lichtstrahl 3 durch diesen Fehler abgelenkt und tritt als abgelenkter Lichtstrahl 7 aus der Flachglasbahn 4 aus. Durch die Ablenkung trifft er einen Bereich der transparenten Scheibe 8, der nicht durch den Stopper 9 unterlegt ist, und tritt in den Empfänger 5 ein, wo er von dem fotoelektrischen Wandler lo erfaßt wird. Über ein Kabel 19 wird der hier entstehende elektrische Impuls der Auswerteeinrichtung 18 zugeführt und ausgewertet.

Die Führung der Flachglasbahn 4 erfolgt auf Transportrollen 13. Es ist jedoch nicht möglich, die Flachglasbahn 4 ohne jede Vertikalbewegung über diese Transportrollen 13 zu führen, insbesondere dann nicht, wenn es sich um eine sehr dünne Flachglasbahn 4 handelt. Durch diese Vertikalbewegung wird der Lichtstrahl 3 in unterschiedlicher Höhe gebrochen, so daß er in unterschiedlichen Bereichen auf die transparente Scheibe 8 des Emfpängers 5 auftrifft. Die Breite des Stoppers 9 ist daher so bemessen, daß diese vertikale Bewegung der Flachglasbahn 4 ausgeglichen wird.

Um auch möglichst feine Fehler in der Flachglasbahn 4 zu erfassen, ist der Durchmesser des vom Laserstrahler 12 ausgesandten Lichtstrahles 3 gering bemessen. Der auf dem Spiegelrad 2 gebildete Lichtpunkt 15 weist einen Durchmesser von 1 mm auf, d.h., daß auch kleine Fehlstellen in der Glasbahn noch sicher erkannt werden können.

Patentansprüche.

1. Vorrichtung zum Prüfen von Flachglasbahnen im Durchlichtverfahren mittels eines fliegenden Lichtpunktes, bestehend aus einer Lichtquelle, insbesondere einem Laserstrahler, einem diesem zugeordneten, umlaufenden Spiegelrad zur Erzeugung eines fliegenden, die Flachglasbahn abtastenden Lichtpunktes und einem unterhalb der Flachglasbahn angeordneten Empfänger, gekennzeichnet durch die Kombination folgender Merkmale:

das Spiegelrad (2) ist so angeordnet, daß der die Flachglasbahn (4) abtastende Lichtstrahl (3) mit dieser entgegen ihrer Laufrichtung einen Winkel $\alpha$ von 35 bis 8o Grad bildet und der unterhalb der Flachglasbahn (4) angeordnete Emfpänger durch eine im wesentlichen unter diesem Winkel $\alpha$ sich erstreckende Schutzplatte (28) abgedeckt ist, die an der der Zulaufrichtung der Flachglasbahn (4) abgewandten Seite (29) des Empfängers (5) einen Schlitz (3o) zum Eintreten des durch die Flachglasbahn (4) durchgelassenen Strahles (6) frei läßt.

0088229

2. Vorrichtung nach Anspruch 1, dadurch gekennzeichnet, daß der Empfänger (5) mit einer transparenten Scheibe (8) abgedeckt ist, die sich im rechten Winkel zum durchgelassenen Lichtstrahl (6) erstreckt.

3. Vorrichtung nach einem der Ansprüche 1 und 2, dadurch gekennzeichnet, daß hinter dem Empfänger (5) ein Scherbenschacht (31) angeordnet ist, der ebenfalls von der Schutzplatte (28) abgedeckt wird.

4. Vorrichtung nach einem der Ansprüche 1 bis 3, dadurch gekennzeichnet, daß ein Blasrohr (34) unterhalb der Schutzplatte (28) im Bereich der transparenten Scheibe (8) angeordnet ist.

5. Vorrichtung nach einem der Ansprüche 1 bis 4, dadurch gekennzeichnet, daß ein Stopper (9) unterhalb der transparenten Scheibe im Bereich des nicht abgelenkten, durchgelassenen Lichtstrahles (6) angeordnet ist.

0088229

Fig. 1

*Fig. 2*

**Fig. 3**

Fig. 4